# FASCICULE DE BREVET EUROPEEN

(11) **EP 0 721 408 B1**
(45) Date de publication et mention de la délivrance du brevet: **04.06.1997**
(21) Numéro de dépôt: 94926965.8
(22) Date de dépôt: 08.09.1994
(51) Int. Cl.: B60T 8/30

(54) **VALVE A SEUIL A POUSSOIR RETRACTILE**
SCHWELLWERTVENTIL MIT RÜCKFÜHRBAREM STÖSSEL
THRESHOLD VALVE WITH RETRACTABLE PUSHROD

(30) Priorité: 05.10.1993 FR 9311830
(43) Date de publication de la demande: 17.07.1996
(73) Titulaire: Bosch Systemes de Freinage, 93700 Drancy (FR)
(72) Inventeur: MOINARD, Patrice, F-93100 Montreuil (FR)
(74) Mandataire: Bentz, Jean-Paul
(86) Numéro de dépôt international: FR9401058
(87) Numéro de publication internationale: WO9509751

(56) Documents cités:
- DE-U- 1 978 111
- FR-A- 2 679 856
- GB-A- 2 065 806

## Description

La présente invention concerne une valve à seuil de pression de fluide, propre à produire une pression de sortie décalée par rapport à une pression d'entrée de ce fluide, cette valve comprenant : un corps dans lequel est percé au moins un alésage cylindrique; un piston définissant dans cet alésage une première chambre dans laquelle débouche une entrée de pression, et une seconde chambre dans laquelle débouche une sortie de pression, ce piston étant susceptible de coulisser de manière étanche dans l'alésage, depuis une position de repos jusqu'à une position extrême, sous l'effet de la pression d'entrée et à l'encontre d'une première force exercée par des premiers moyens élastiques; un clapet porté par le piston et propre à faire communiquer les deux chambres l'une avec l'autre lorsqu'il est ouvert; et un poussoir disposé dans la seconde chambre en regard du clapet et susceptible d'en provoquer l'ouverture lorsque ce poussoir et le clapet sont sollicités l'un vers l'autre avec une force supérieure à un seuil d'ouverture prédéterminé.

Une valve de ce type est par exemple décrite dans le document FR-A1-2 679 856 et utilisable dans un système de freinage, notamment pour véhicule électrique.

En dépit de leur intérêt certain, ce type de valve présente a priori le défaut, dans leur conception initiale, de laisser subsister, dans la chambre de sortie, une pression résiduelle qui ne pouvait être supprimée que par des moyens additionnels à commande séparée, par exemple un électro-aimant.

La présente invention s'inscrit dans ce contexte et vise à proposer des moyens simples, peu coûteux et propres à éliminer la pression résiduelle de façon automatique.

A cette fin, la valve de l'invention, constituée conformément au préambule ci-dessus, est essentiellement caractérisée en ce que le poussoir ferme la seconde chambre de manière étanche en aval de la sortie de pression, en ce que ce poussoir coulisse dans cette seconde chambre, sous l'effet de la pression de sortie, sur une course de longueur déterminée, et à l'encontre d'une seconde force exercée par des seconds moyens élastiques, supérieure au seuil d'ouverture, et de même sens que la première force, en ce que la course du poussoir est définie entre une position de repos, que ce poussoir adopte lorsque le piston est dans sa position de repos, et une position extrême de ce poussoir, dans laquelle celui-ci rencontre une butée solidaire du corps, en ce que ce poussoir ouvre le clapet lorsqu'il est dans sa position de repos, la longueur de la course du poussoir étant supérieure à un déplacement relatif que doivent subir le poussoir et le piston, depuis leur position de repos, pour assurer la fermeture du clapet, et en ce que la position de repos et la position extrême du piston sont séparées par une distance au moins égale celle qui sépare la position du poussoir pour laquelle le clapet se ferme, de la position extrême de ce poussoir dans laquelle ce dernier rencontre la butée.

Par ailleurs, la réalisation de cette valve se trouve grandement simplifiée en prévoyant que le piston et le poussoir subissent, de la part de la pression de sortie, des efforts respectifs s'exerçant sur des sections de pression respectives différentes, la section de pression du piston étant supérieure à la section de pression du poussoir.

D'autres caractéristiques et avantages de l'invention ressortiront clairement de la description qui en est faite ci-après, à titre indicatif et nullement limitatif en référence aux dessins annexés, sur lesquels :
- la Figure 1 est une vue en coupe d'une valve conforme à l'invention, représentée en position de repos;
- la Figure 2 est une vue réduite semblable à la Figure 1;
- la Figure 3 est une vue réduite semblable à la Figure 1, dans laquelle la valve est représentée en cours de fonctionnement;
- la Figure 4 est une vue réduite semblable à la Figure 1, dans laquelle la valve est représentée en fin de fonctionnement; et
- la Figure 5 est un diagramme de pression, représentant le fonctionnement de la valve.

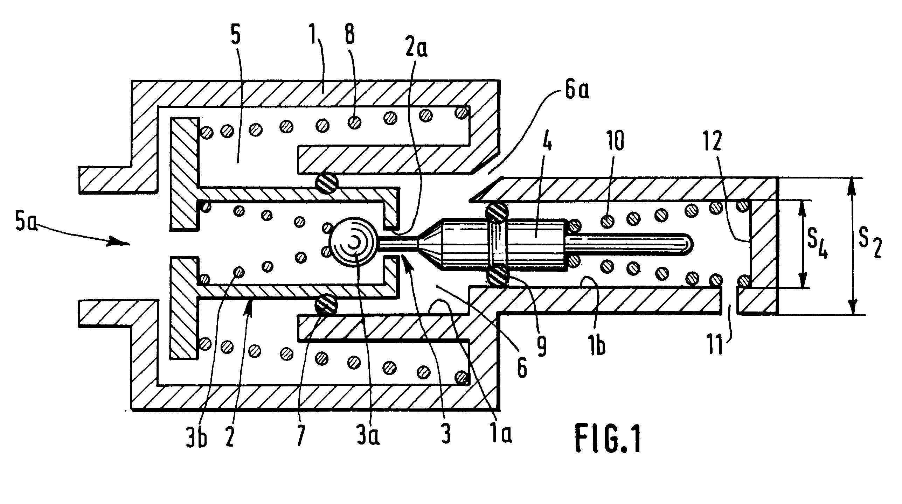

Comme le montre la figure 1, la valve de l'invention comprend essentiellement un corps 1, dans lequel est percé au moins un alésage cylindrique 1a, 1b, un piston 2, un clapet 3, et un poussoir 4.

Le piston 1 définit dans l'alésage 1a une première chambre 5 dans laquelle débouche une entrée de pression 5a reliée à une source de fluide hydraulique à pression variable (non représentée), et une seconde chambre 6 dans laquelle débouche une sortie de pression 6a reliée à un circuit d'utilisation de ce fluide sous pression, la valve ayant pour fonction de n'autoriser un accroissement sensible de la pression de sortie qu'avec un certain retard par rapport à un accroissement initial de la pression d'entrée.

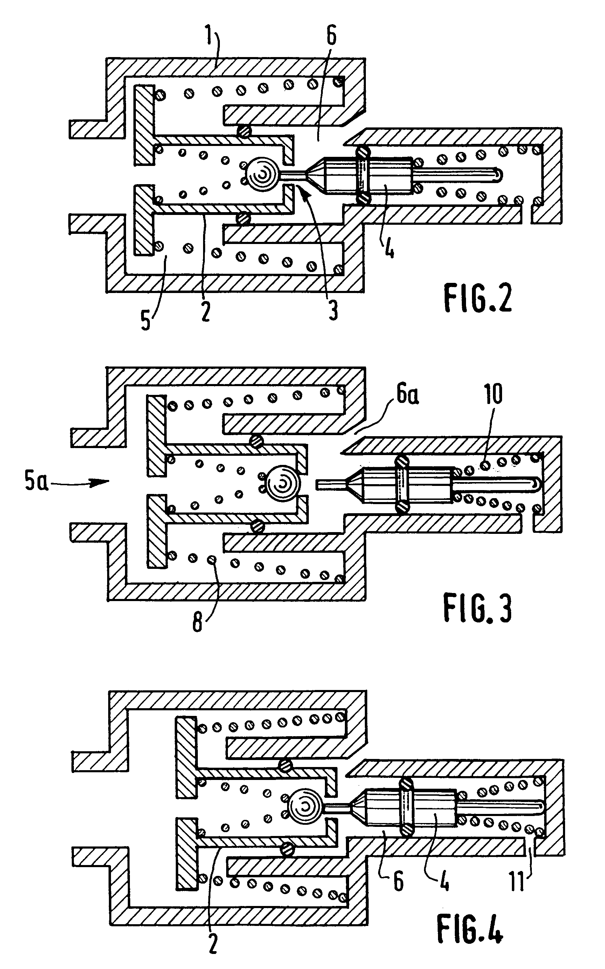

Le piston est susceptible de coulisser dans l'alésage 1a, de manière étanche grâce à la présence d'un joint annulaire 7, depuis une position de repos représentée sur les figures 1 et 2, jusqu'à une position extrême représentée à la figure 4, sous l'effet de la pression d'entrée et à l'encontre d'une première force exercée par un premier ressort 8.

Le clapet 3 est porté par le piston 2 et permet, lorsqu'il est ouvert, de faire communiquer les deux chambres l'une avec l'autre à travers le piston 2. Dans le mode de réalisation illustré, ce clapet est essentiellement constitué par une bille 3a sollicitée par un ressort 3b contre un orifice 2a du piston.

Le poussoir 4 est disposé dans la seconde chambre 6, en regard du clapet 3, et permet de provoquer l'ouverture de ce dernier lorsque ce poussoir et le clapet 3 sont sollicités l'un vers l'autre avec une force supérieure à un seuil d'ouverture prédéterminé correspondant à la force exercée par le ressort de clapet 3b.

Comme le montre la figure 1, le poussoir 4, coopérant avec un joint 9, ferme la seconde chambre 6 de manière étanche en aval de la sortie de pression 6a, cette dernière s'ouvrant donc entre les joints 7 et 9.

Plus précisément, le poussoir 4 coulisse dans l'alésage 1b, qui délimite au moins partiellement la seconde chambre, en subissant d'une part l'effet de la pression de sortie qui s'exerçe sur sa section S4, et d'autre part l'effet antagoniste d'un second ressort 10 disposé dans le fond de l'alésage 1b, ce dernier s'ouvrant sur l'atmosphère par un orifice 11.

La force exercée par le second ressort 10 est supérieure au seuil d'ouverture du clapet 3, et de même sens que la force exercée par le premier ressort 8.

Le poussoir 4 est susceptible de se déplacer dans la chambre 6 sur une course de longueur déterminée, définie entre une position de repos, telle que représentée sur les figures 1 et 2 et que ce poussoir adopte lorsque le piston 2 est lui-même dans sa position de repos, et une position extrême, telle que représentée sur les figures 3 et 4 et dans laquelle ce poussoir rencontre une butée 12 solidaire du corps 1 de la valve.

Comme le montrent les figures 1 et 2, le poussoir 4, poussé par le second ressort 10, ouvre le clapet 3 lorsqu'il se trouve dans sa position de repos.

Cependant le second ressort 10 rend le poussoir 4 rétractile, la longueur de la course qui lui est autorisée étant supérieure au déplacement relatif que doivent subir ce poussoir et le piston 2, depuis leur position de repos, pour assurer la fermeture du clapet 3.

Par ailleurs, la position de repos et la position extrême du piston 2 sont séparées par une distance au moins égale celle qui sépare la position du poussoir pour laquelle le clapet 3 se ferme de la position extrême de ce poussoir 4, dans laquelle ce dernier rencontre la butée 12.

Enfin, selon une caractéristique optionnelle mais avantageuse de l'invention, le piston et le poussoir subissent, de la part de la pression de sortie, des efforts respectifs s'exerçant sur des sections de pression respectives S2 et S4 différentes, la section de pression S2 du piston 2 étant supérieure à la section de pression S4 du poussoir 4.

Le fonctionnement de la valve qui vient d'être décrite est illustré sur les figures 2 à 5, Po désignant, sur cette dernière figure, la pression d'entrée, et P1 la pression de sortie.

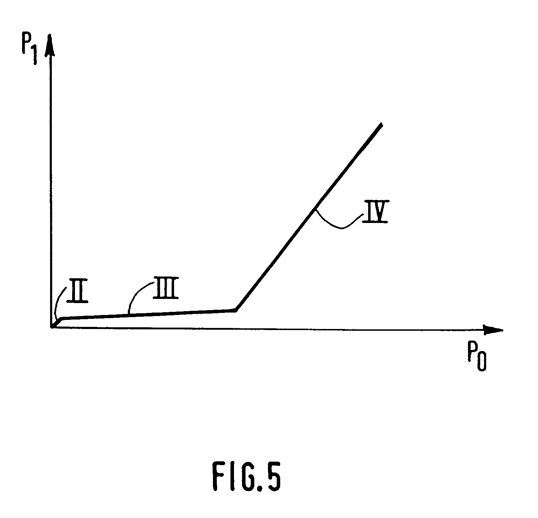

Dans la position de repos de la valve, qui correspond à une pression d'entrée nulle (figure 2), les chambres d'entrée 5 et de sortie 6 sont mises en communication par le clapet 3 ouvert, de sorte que tout accroissement de la pression d'entrée se traduit par un accroissement identique de la pression de sortie, ce stade de fonctionnement étant repéré par la référence II sur la figure 5.

Cependant l'accroissement de la pression de sortie, agissant sur la section S4 du poussoir, repousse ce dernier en direction de la butée 12 en comprimant le second ressort 10, jusqu'à un point, correspondant à une situation intermédiaire entre celles des figures 2 et 3, où le clapet 3 se ferme.

L'élévation ultérieure de la pression d'entrée déplace le piston 2 vers le poussoir en comprimant le premier ressort 8. Cependant le poussoir 4 est lui-même sollicité vers la butée 12 par le fluide déplacé dans la chambre 6 et soumis à la pression de sortie, ce poussoir 4 se déplaçant d'autant plus vite par rapport au piston 2 que le rapport des sections S2 / S4 est plus grand, et se trouvant finalement arrêté par la butée 12. Ce stade de fonctionnement est illustré sur la figure 3 et repéré par la référence III sur la figure 5.

Dans la mesure où l'accroissement ultérieur de la pression d'entrée continue à pousser le piston 2 vers le poussoir 4 alors que ce dernier est en butée, le clapet 3 finit par se trouver à nouveau en contact avec le poussoir. L'ouverture du clapet qui en résulte, et l'écoulement de fluide de la première chambre vers la seconde permet alors une élévation de la pression de sortie, ce stade de fonctionement étant illustré sur la figure 4 et repéré par la référence IV sur la figure 5.

## Revendications

1. Valve à seuil de pression de fluide, propre à produire une pression de sortie décalée par rapport à une pression d'entrée de ce fluide, cette valve comprenant : un corps (1) dans lequel est percé au moins un alésage cylindrique (1a, 1b); un piston (2) définissant dans cet alésage une première chambre (5) dans laquelle débouche une entrée de pression (5a), et une seconde chambre (6) dans laquelle débouche une sortie de pression (6a), ce piston étant susceptible de coulisser de manière étanche dans l'alésage, depuis une position de repos jusqu'à une position extrême, sous l'effet de la pression d'entrée et à l'encontre d'une première force exercée par des premiers moyens élastiques (8); un clapet (3) porté par le piston (2) et propre à faire communiquer les deux chambres l'une avec l'autre lorsqu'il est ouvert; et un poussoir (4) disposé dans la seconde chambre en regard du clapet et susceptible d'en provoquer l'ouverture lorsque ce poussoir et le clapet sont sollicités l'un vers l'autre avec une force supérieure à un seuil d'ouverture prédéterminé, caractérisée en ce que le poussoir (4) ferme la seconde chambre (6) de manière étanche en aval de la sortie de pression (6a), en ce que ce poussoir (4) coulisse dans cette seconde chambre (6), sous l'effet de la pression de sortie, sur une course de longueur déterminée, et à l'encontre d'une seconde force exercée par des seconds moyens élastiques (10), supérieure au seuil d'ouverture, et de même sens que la première force, en ce que la course du poussoir est définie entre une position de repos, que ce poussoir adopte lorsque le piston est dans sa position de repos, et une position extrême de ce poussoir, dans laquelle celui-ci rencontre une butée (12) solidaire du corps (1), en ce que ce poussoir ouvre le clapet (3) lorsqu'il est dans sa position de repos, la longueur de la course du poussoir étant supérieure à un déplacement relatif que doivent subir le poussoir et le piston, depuis leur position de repos, pour assurer la fermeture du clapet, et en ce que la position de repos et la position extrême du piston (2) sont séparées par une distance au moins égale celle qui sépare la position du poussoir pour laquelle le clapet se ferme, de la position extrême de ce poussoir dans laquelle ce dernier rencontre la butée.

2. Valve suivant la revendication 1, caractérisée en ce que le piston et le poussoir subissent, de la part de la pression de sortie, des efforts respectifs s'exerçant sur des sections de pression respectives différentes (S2, S4), la section de pression (S2) du piston (2) étant supérieure à la section de pression (S4) du poussoir (4)

## Claims

1. Valve with a fluid pressure threshold, capable of producing an outlet pressure which is shifted with respect to an inlet pressure of this fluid, this valve comprising: a body (1) in which is pierced at least one cylindrical bore (1a, 1b); a piston (2) defining, in this bore, a first chamber (5) into which there emerges a pressure inlet (5a), and a second chamber (6) into which there emerges a pressure outlet (6a), this piston being capable of sliding in sealed fashion in the bore, from a rest position as far as a limiting position, under the effect of the inlet pressure and counter to a first force which is exerted by first elastic means (8); a valve element (3) carried by the piston (2) and capable of causing the two chambers to communicate with one another when it is open; and a push rod (4) located in the second chamber facing the valve element and capable of causing the latter to open when this push rod and the valve element are urged towards one another with a force greater than a predetermined opening threshold, characterized in that the push rod (4) closes the second chamber (6) in sealed fashion downstream of the pressure outlet (6a), in that this push rod (4) slides in this second chamber (6) under the effect of the outlet pressure, over a stroke of determined length, and counter to a second force exerted by a second elastic means (10), which second force is greater than the opening threshold, and in the same direction as the first force, in that the stroke of the push rod is defined between the rest position which this push rod adopts when the piston is in its rest position, and a limiting position of this push rod, in which the latter encounters a stop piece (12) secured to the body (1), in that this push rod opens the valve element (3) when it is in its rest position, the length of the stroke of the push rod being greater than a relative displacement which the push rod and the piston have to undergo from their rest position in order to close the valve element, and in that the rest position and the limiting position of the piston (2) are separated by a distance at least equal to that which separates the position of the push rod for which the valve element closes from the limiting position of this push rod in which the latter encounters the stop piece.

2. Valve according to Claim 1, characterized in that the piston and the push rod are subjected, by the outlet pressure, to respective forces which are exerted on different pressure cross-sections (S2, S4) respectively, the pressure cross-section (S2) of the piston (2) being greater than the pressure cross-section (S4) of the push rod (4).

## Patentansprüche

1. Fluiddruckschwellenventil, das einen Ausgangsdruck erzeugen kann, der bezüglich eines Eingangsdrucks dieses Fluids verschoben ist, wobei das Ventil enthält: einen Körper (1), in welchem wenigstens eine zylindrische Bohrung (1a, 1b) ausgebildet ist; einen Kolben (2), der in dieser Bohrung eine erste Kammer (5) bildet, in die ein Druckeingang (5a) mündet, und eine zweite Kammer (6), in die ein Druckausgang (6a) mündet, wobei dieser Kolben in dichter Weise in der Bohrung unter der Wirkung des Eingangsdrucks und entgegen einer ersten Kraft, die von ersten elastischen Mitteln (8) ausgeübt wird, aus einer Ruhestellung in eine Endstellung gleiten kann; ein Ventilelement (3), das von dem Kolben (2) getragen wird und die beiden Kammern miteinander verbinden kann, wenn es geöffnet ist; und einen Stößel (4), der in der zweiten Kammer gegenüber dem Ventilelement angeordnet ist und dessen Öffnen hervorrufen kann, wenn der Stößel und das Ventilelement gegeneinander mit einer Kraft beaufschlagt werden, die größer als eine vorbestimmte Öffnungsschwelle ist, dadurch gekennzeichnet, daß der Stößel (4) die zweite Kammer (6) in dichter Weise hinter dem Druckausgang (6a) verschließt, daß dieser Stößel (4) in dieser zweiten Kammer (6) unter der Wirkung des Ausgangsdrucks entlang einem Weg vorbestimmter Länge entgegen einer zweiten Kraft gleitet, die von zweiten elastischen Mitteln (10) ausgeübt wird, größer als die Öffnungsschwelle ist und die gleiche Richtung wie die erste Kraft hat, daß der Weg des Stößels zwischen einer Ruhestellung, welche der Stößel einnimmt, wenn sich der Kolben in seiner Ruhestellung befindet, und einer Endstellung dieses Stößels bestimmt ist, in welcher dieser auf einen fest mit dem Körper (1) verbundenen Anschlag (12) trifft, daß der Stößel das Ventilelement (3) öffnet, wenn er sich in seiner Ruhestellung befindet, wobei die Länge des Weges des Stößels größer als eine Relativverschiebung ist, die der Stößel und der Kolben aus ihrer Ruhestellung heraus ausführen müssen, um das Verschließen des Ventilelementes zu gewährleisten, und daß die Ruhestellung und die Endstellung des Kolbens (2) voneinander durch einen Abstand getrennt sind, der wenigstens gleich demjenigen ist, der die Stellung des Stößels, bei der das Ventilelement geschlossen wird, von der Endstellung des Stößels trennt, in welcher dieser auf den Anschlag trifft.

2. Ventil nach Anspruch 1, dadurch gekennzeichnet, daß der Kolben und der Stößel seitens des Ausgangsdrucks entsprechende Kräfte erfahren, die sich auf entsprechende unterschiedliche Druckquerschnitte (S2, S4) auswirken, wobei der Druckquerschnitt (S2) des Kolbens (2) größer als der Druckquerschnitt (S4) des Stößels (4) ist.
